# EUROPÄISCHE PATENTANMELDUNG

(11) **EP 1 062 854 A2**
(43) Veröffentlichungstag der Anmeldung: **27.12.2000**
(21) Anmeldenummer: 00112744.8
(22) Anmeldetag: 16.06.2000
(51) Int. Cl.: A01B 33/06

(54) **Bodenbearbeitungsmaschine, insbesondere Kreiselegge bzw. -grubber**

(30) Priorität: 25.06.1999 DE 19929080
(71) Anmelder: Hofmann, Hans, D-89233 Neu-Ulm (DE)
(72) Erfinder: Hofmann, Hans, D-89233 Neu-Ulm (DE)
(74) Vertreter: Weber, Gerhard

(57) **Zusammenfassung**

Bodenbearbeitungsmaschinen, insbesondere Kreiseleggen, mit wenigstens einem oder mehreren in einer quer zur Fahrtrichtung verlaufenden Reihe an aufrechten Wellen angeordneten rotierend angetriebenen Kreiseln ist zwecks Ermöglichung des Anschlusses einheitlicher kostengünstigerer gestalteten Befestigungsteilen der Werkzeuge und leichterer Auswechselbarkeit derselben mit einer mittels einer Anschlußplatte befestigbaren Adaptervorrichtung versehen, welche aus stirnseitig unterhalb der Anschlußplatte angeordneten Werkzeugträgern besteht, welche mit nach unten gerichteten Aufnahmeöffnungen ihres allseitig geschlossenen Gehäuses den Befestigungsteil der Arbeitswerkzeuge formschlüssig umfassen und durch einen in fluchtende Querbohrungen eingeführten Sicherungsbolzen halten.

## Beschreibung

Die Erfindung betrifft eine Bodenbearbeitungsmaschine, insbesondere Kreiselegge bzw. -grubber, mit wenigstens einem oder mehreren an einer aufrechten Achse bzw. Welle umlaufenden Kreiseln, deren Arbeitswerkzeuge mit ihrem Befestigungsteil in Werkzeugträgern lösbar angeordnet sind.

Aus der DE 26 41 688 C2 ist eine Bodenbearbeitungsmaschine bekannt, bei welcher der Werkzeugträger bügelartig mit stirnseitigen Schenkeln ausgebildet ist. Außen an den Schenkeln ist in Ausnehmungen je ein flaches Werkzeug fluchtend zu dem Schenkel angeordnet und mit einer Schraube befestigt. Der Schraubenkopf liegt außen und der Gewindeschaft und die aufgeschraubte Mutter zwischen plattenförmigen die beiden Schenkel verbindenden Stegen. Zur Befestigung der Werkzeuge müssen große hochfeste Schrauben verwendet und mit großen Kräften angezogen werden, was bei Werkzeugwechsel sehr mühevoll und zeitraubend ist. Auch ist der ungeschützte Schraubenkopf einem großen Verschleiß ausgesetzt und kann sich auch leicht verdrehen. Vor allem durch die Biege- und Torsionskräfte, welche beim Einsatz der Maschine an den Werkzeugen auftreten, können so auch Beschädigungen verursacht werden, welche das Auswechseln der Werkzeuge sehr erschweren und auf dem Acker unmöglich machen.

Da nicht genormt, gibt es bei Kreiseleggen und -grubbern eine Vielzahl Von Werzeugträgern und dementsprechend geformte Befestigungsteile der Werkzeuge. Die jeweils in keinen Serien gefertigten Werkzeuge sind daher verhältnismäßig teuer. Dazu kommt daß bei einer Reihe Haltevorrichtungen die Befestigungsteile der Werkzeuge z.B. oben rechtwinklig zum Bearbeitungsteil abgewinkelt sind, was gegenüber Werkzeugen mit geradem Befestigungsteil einen höheren Material- und Arbeitsaufwand bedingt. Bei an Halteflächen der Kreisel anbaubaren Werkzeugen mit geraden Befestigungsteilen dagegen müssen diese in der Regel mit wenigstens zwei Schraubbolzen, gegebenenfalls unter Beifügung eines Klemmstücks, an die Halterung angeklemmt werden, was ebenfalls die Werkzeuge verteuert und das Auswechseln erschwert.

Obwohl die Verwendung von Kreiseleggen ein großes Ausmaß angenommen hat ist dennoch ihr Einsatz,von wenigen Ausnahmen und Versuchen abgesehen, auf die Saatbettbereitung beschränkt geblieben. Weitere Anwendungen bedingen einen häufigeren Werkzeugwechsel. So eignen sich z.B. flache Zinken für die Saatbettbereitung, Zinken mit eckigem Querschnitt zur Queckenbekämpfung und Zinken mit nach innen abgewinkelten Schenkeln zur Stoppelbearbeitung und ggf. zum Flachpflügen. Die besonders zahlreich in der Landwirtschaft vorhandenen Kreiseleggen könnten daher eigentlich eine Schlüsselrolle in der flachen Bodenbearbeitung einnehmen, wie es bisher nur mit Bodenfräsen möglich war, welche allerdings bei schwierigen Bodenverhältnissen zur Verstopfung neigen.

Dieses will die Erfindung ermöglichen. Die zu lösende Aufgabe besteht demnach darin, den Einsatz derart verschiedener Werkzeuge bei allen bereits vorhandenen Kreiseltypen leichter und wirtschaftlicher zu ermöglichen indem die einzelnen Werkzeugausführungen in größeren Fertigungsserien und damit wesentlich verbilligt bereitgestellt werden können.

Die Aufgabe wird durch eine Adaptervorrichtung gemäß den kennzeichnenden Merkmalen des Anspruchs 1 gelöst.

Die durch die Erfindung erreichten Vorteile bestehen in folgendem:
- Wesentliche Verbilligung der nun in größerer Menge herstellbaren einheitliche Befestigungsteile aufweisenden Werkzeuge.
- Wirtschaftlichere Ausnutzung von Kreiseleggen für mehrere Bodenbearbeitungszwecke;
- Verbilligung der Werkzeuge durch Materialersparnis und einer einfacheren Herstellung der zum Arbeitsteil geraden Befestigungsteile ;
- Leichte zeitsparende Auswechslung sämtlicher Werkzeuge.

Die Anbauplatte der Adaptervorrichtung kann den verschiedenen Einbaubedingungen entsprechende Anschlußteile aufweisen. Meist genügt eine Verschraubung mit an den Antriebswellen der Maschinen gewöhnlich vorgesehenen Kreiselplatten. Mittels einer zentralen Öffnung und einem seitlichen Schlitz kann sie auch oberhalb von Kreiselteilen, die Antriebswelle umfassend montiert werden. Hierbei kann ihr eine Kreiselteile von unten umfassende mit ihr verschraubbare Klemmplatte zugeordnet sein oder umgekehrt An den beiden äußeren Enden der Anbauplatte sind erfindungsgemäß mit ihren Aufnahmeöffnungen nach unten weisende Werkzeugträger angeordnet. Diese besitzen vorzugsweise einen rechteckigen Querschnitt und umfassen den Befestigungsabschnitt der Werkzeuge formschlüssig, sodass zu deren Halterung ein Sicherungsbolzen genügt, was zudem einen einfachen und schnellen Austausch ermöglicht. Weitere Ausgestaltungen sind in den Unteransprüchen ersichtlich.

Die Erfindung ist in der Zeichnung an einem Ausführungsbeispiel erläutert und beschrieben.

Es zeigt
Figur 1 eine Seitenansicht der an einen Kreisel angebaute Adaptervorrichtung
Figur 2 eine Draufsicht auf die Anordnung gemäß Figur 1 von unten gesehen.

Es bedeuten:

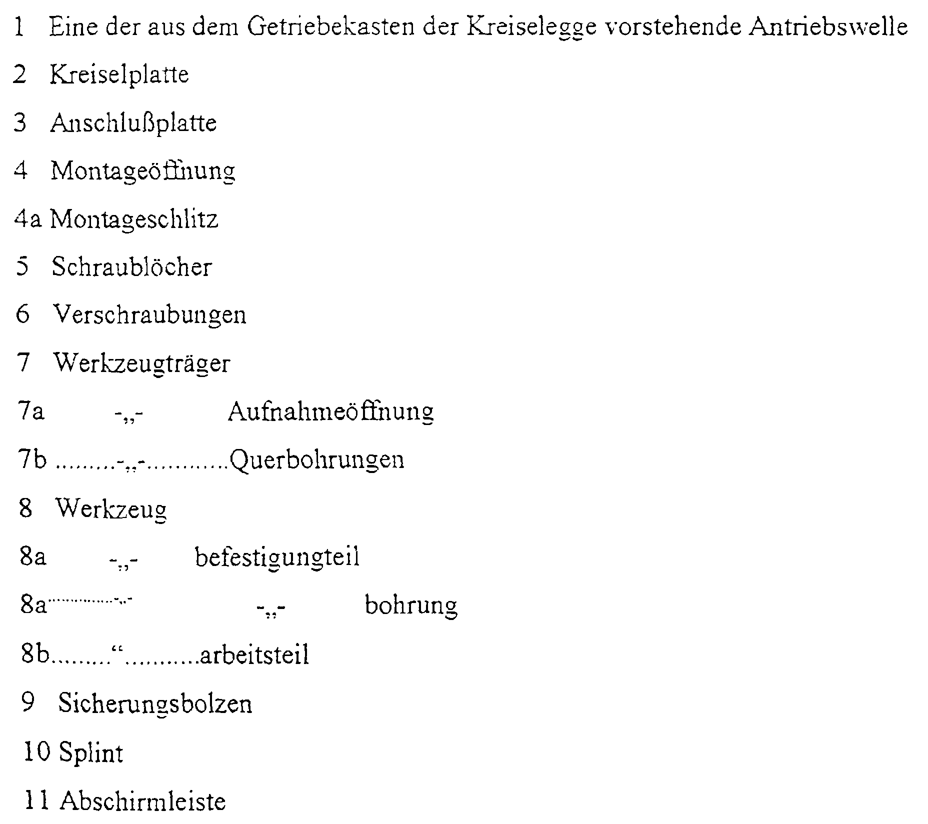

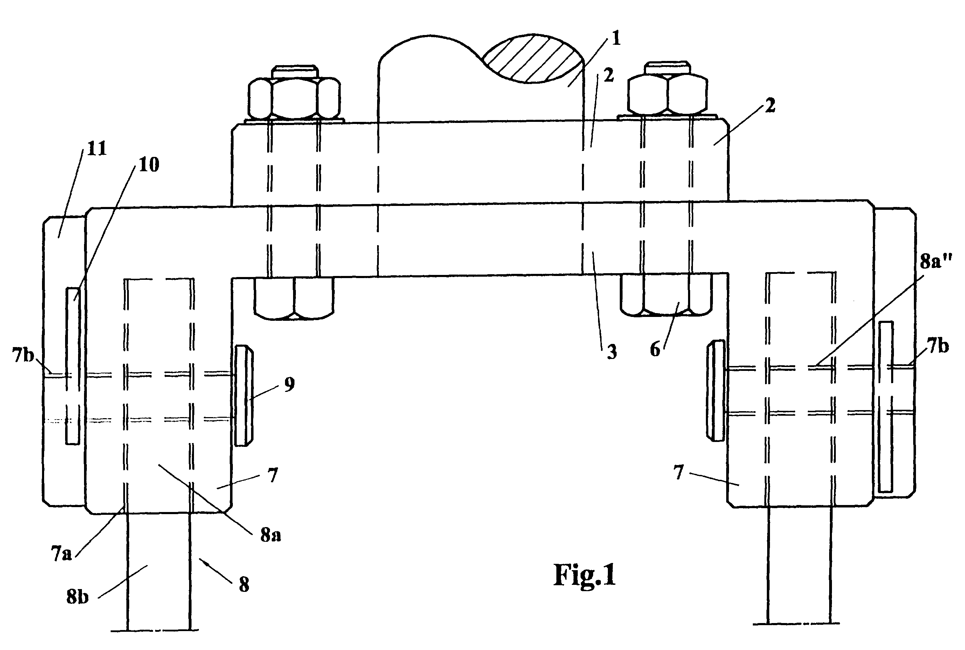

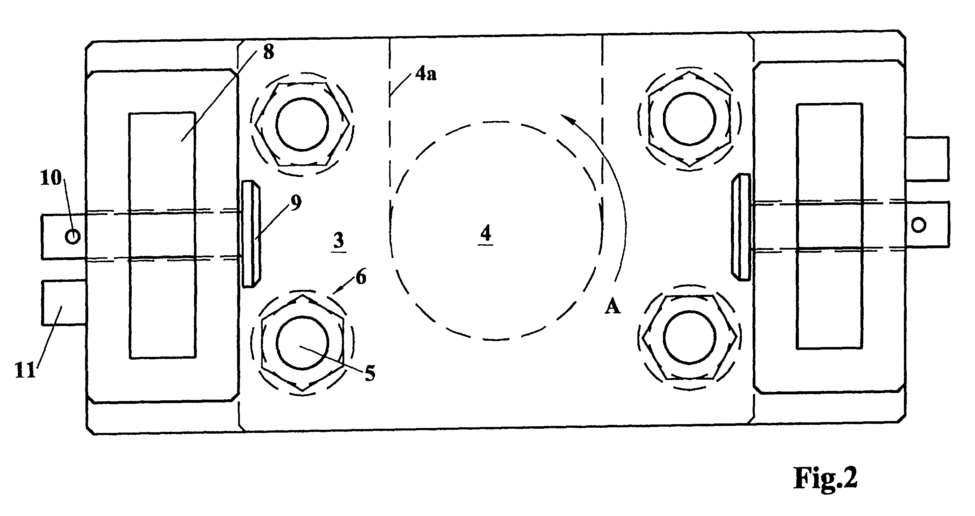

In Figur 1 ist eine von mehreren an einem nicht dargestellten Traggehäuse einer Kreiselegge vorstehende unten eine tellerförmige Kreiselplatte 2 aufweisende Antriebswelle 1 zu sehen. An der Kreiselplatte ist eine Adaptervorrichtung mit einer diese seitlich überragenden Anschlußplatte 3 angebracht worden. Die Verbindung erfolgte durch Verschraubungen 6 an in Figur 2 ersichtlichen fluchtenden Schraublöchern 5 an beiden Platten. Seitlich unten an der Anschlußplatte sind sich nach unten erstreckende Werkzeugträger 7 angeordnet. welche die Befestigungsteile 8a der Werkzeuge 8 mit ihrer Aufnahmeöffnung 7a, aufnehmen und formschlüssig umfassen. Die Werkzeuge werden durch einen Sicherungsbolzen 9 und Splint 10 an fluchtenden Bohrungen 7b 8a in den Werkzeugträgern und im Befestigungsteil 8a leicht lösbar gehalten. In Drehrichtung der Kreisel sind zum Schutz der Splinte gegen Verschleiß und Verschmutzung an den Werkzeugträgern vor den Splinten 10 Abschirmleisten 11 angeordnet.

## Patentansprüche

1. Bodenbearbeitungsmaschine, insbesondere Kreiselegge, mit wenigstens einem oder mehreren in einer quer zur Fahrtrichtung verlaufenden Reihe an aufrechten Wellen (1) angeordnete rotierend angetriebenen Kreiseln (2), **gekennzeichnet durch** eine an den Kreiseln mit Hilfe wenigstens einer Anschlußplatte (3) befestigbaren Adaptervorrichtung, bestehend aus stirnseitig unterhalb der Anschlußplatte angeordneten Werkzeugträgern (7), welche mit nach unten gerichteten Aufnahmeöffnungen (7a) ihres allseitig geschlossenen Gehäuses den Befestigungsteil (8a) der Arbeitswerkzeuge (8) formschlüssig umfassen und durch einen in fluchtende Querbohrungen (9) eingeführten Sicherungsbolzen (10) halten.

2. Bodenbearbeitungsmaschine nach Anspruch 1, dadurch gekennzeichnet, daß die Aufnahmeöffnung (7a) und die Befestigungsteile (8a) der Werkzeuge (8) einen rechteckigen Querschnitt aufweisen.

3. Bodenbearbeitungsmaschine nach Anspruch 1, dadurch gekennzeichnet, daß die Anschlußplatte (3) eine die Antriebswelle aufnehmende Öffnung (4) aufweist.

4. Bodenbearbeitungsmaschine nach Anspruch 3, dadurch gekennzeichnet, daß die Öffnung (4) der Anschlußplatte (3) nach einer Seite zur Aufnahme der Antriebswelle (1) einen Schlitz (4a) aufweist.

5. Bodenbearbeitungsmaschine nach Anspruch 1, dadurch gekennzeichnet, daß an den Werkzeugträgern (7) -in Drehrichtung gesehen- vor den Splinten (10) Abschirmleisten (11) angeordnet sind.

6. Bodenbearbeitungsmaschine nach Anspruch 1, dadurch gekennzeichnet, daß der Anschlußplatte (3) eine etwa formgleiche Klemmplatte zugeordnet ist und beide Platten zum umfassen von fest mit der Antriebswelle verbundenen Kreiselteilen miteinander verschraubbar ausgeführt sind.

7. Bodenbearbeitungsmaschine nach Anspruch 1 und wenigstens einem der folgenden Ansprüche, **gekennzeichnet durch** Werkzeuge (8), mit einem aufrechten Befestigungsteil (8a) und einer mit Querbohrungen (7b) der Werkzeugträger (7) fluchtenden Bohrung (8a in dem Befestigungsteil (8a).
